# EUROPEAN PATENT APPLICATION

(11) **EP 0 632 609 A2**
(43) Date of publication of application: **04.01.1995**
(21) Application number: 94304527.8
(22) Date of filing: 22.06.1994
(51) Int. Cl.: H04B 15/00, H04B 15/02, H03G 3/20

(54) **A method and apparatus for averting electromagnetic interference**

(30) Priority: 30.06.1993 US 85603
(71) Applicant: AT&T Corp., New York, NY 10013-2412 (US)
(72) Inventor: Greenstein, Lawrence Joel, Edison, New Jersey 08837 (US); Shah, Nitin J., Scotch Plains, New Jersey 07076 (US); Vannucci, Giovanni, Red Bank, New Jersey 07701 (US)
(74) Representative: Buckley, Christopher Simon Thirsk

(57) **Abstract**

A method and apparatus is disclosed for diminishing the electromagnetic interference that results from TDMA and TDD radios, i.e., radios which radiate an RF signal with a time-varying envelope. A radio comprising an embodiment of the present invention radiates, in transmit mode, an information-bearing signal at an average RF power in an appropriate transmit frequency channel (determined by 119,115) but radiates, in idle mode, a spurious signal at the same average RF power (by virtue of loop 107,111,113,101) but in a frequency channel set aside for the spurious signal. In essence, the radio transmits during its idle mode at the same average power level as during transmit mode but in a different frequency channel (determined by 119,115), one that is dedicated to that purpose.

## Description

### Field of the Invention

The present invention relates to radio in general, and more particularly, to methods and apparatus which prevent RF baseband interference.

### Background of the Invention

Any RF signal with a time-varying envelope can induce baseband interference in a device characterized by a nonlinear response to radio waves. The mechanism could be, but is not necessarily, a second-order nonlinearity that produces an effect similar to that of a square-law envelope detector. When the square-law-detected envelope contains significant energy in the audio band, the result could be, for example, undesirable interference to wearers of hearing aids.

### Summary of the Invention

The present invention provides a technique for diminishing the interference caused by an RF signal with a time-varying envelope while avoiding many of the costs and restrictions associated with other techniques. Specifically, embodiments of the present invention can be especially well-suited for radios in systems employing time division multiple access ("TDMA") (e.g., GSM, IS-54, JDC), time division duplexing ("TDD") (e.g., CT-2), and hybrid systems ("TDMA/TDD") (e.g., PHP and DECT). For the purposes of this specification, TDMA, TDD and TDMA/TDD systems shall all be referred to as TDMA systems.

These results are obtained in an illustrative embodiment of the present invention which comprises a TDMA radio having a transmit mode and an idle mode. During the transmit mode, the radio transmits an information-bearing signal in a first frequency channel with a first average RF power. During the idle mode, however, the radio transmits a signal in a second frequency channel with a second average RF power.

### Brief Description of the Drawing

FIG. 1 shows a block diagram of an illustrative embodiment of the present invention.

FIG. 2 depicts a block diagram of a second illustrative embodiment of the present invention.

FIG. 3 depicts a flowchart of the operation of an illustrative embodiment of the present invention.

### Detailed Description

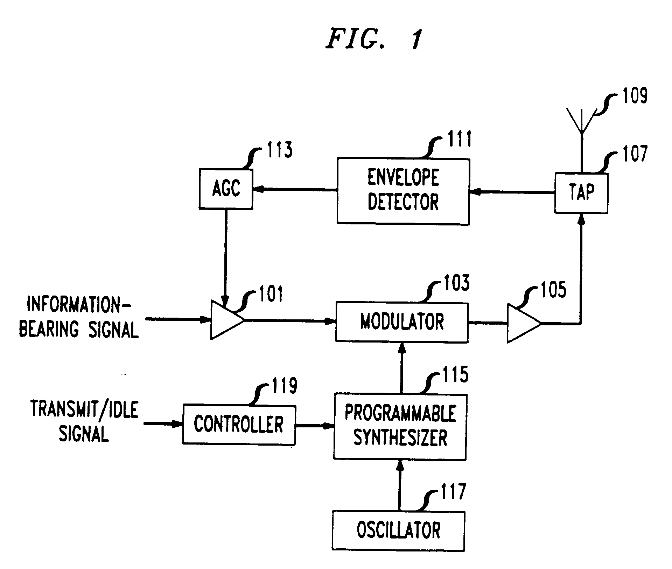

FIG. 1 depicts a block diagram of an illustrative embodiment of the present invention as presented in the context of a time division multiple access ("TDMA") communications system, a time division duplex ("TDD") system, or a hybrid TDMA/TDD system. In, for example, a typical TMDA system, several users time-share a frequency channel in a round-robin order so that all benefit (e.g., transmit) from the channel. Each user's radio has (1) a transmit mode, when an information-bearing signal is radiated in the shared frequency channel, and (2) an idle mode, when nothing is radiated in the shared frequency channel. When one user's radio is in transmit mode, the other users' radios are in idle mode, so as to prevent a cacophony in the shared frequency channel. The respective users take turns transmitting and being idle, so that others may transmit. The rate at which a single radio cycles between transmit mode and idle mode is referred to as the "frame rate." In the prior art, each radio ceases radiating while it is in idle mode (1) so as to not interfere with the appropriately radiating radio, and (2) so as to conserve power.

The repetitive radiating and not-radiating of a radio in accordance with the frame rate causes a time-varying RF envelope which can cause undesirable RF interference. When the frame rate corresponds to an audio-band frequency, the result can be interference to wearers of hearing aids.

The time-varying RF envelope interference could be diminished if each radio transmitted during its idle mode as well as during its transmit mode, and with the same average RF power. This, however, as mentioned above, would cause each user to interfere with the other users.

The illustrative embodiment of the present invention shown in FIG. 1 overcomes this problem by radiating normally during transmit mode, and by also radiating during idle at substantially the same average RF power as during transmit mode, but in a different frequency channel. The idle mode frequency channel is advantageously close to the transmit mode frequency channel but is specifically designated for these transmissions. By closely matching the average RF power levels radiated during both the transmit and idle modes the time-varying RF envelope interference can be greatly diminished.

Referring to FIG. 1, an information-bearing signal (e.g., voice, data, etc.) is advantageously fed into amplifier 101. The gain of amplifier 101 is advantageously controlled by automatic gain control 113. From amplifier 101, the signal passes to modulator 103 where it is modulated onto a signal received from programmable synthesizer 115. It will be clear to those skilled in the art how to make and use amplifier 101, automatic gain control 113, modulator 103 and programmable synthesizer 115. The modulated signal is fed into amplifier 105 and to antenna 109. Tap 107 samples the signal fed to antenna 109 and feeds the samples to envelope detector 111. Envelope detector 111 feeds a signal to automatic gain control 113 representative of the average RF power of the radiated signal. It will be clear to those skilled in the art how to make and use tap 107 and envelope detector 111. It should be remembered that the purpose of amplifier 101, tap 107, envelope detector 111 and automatic gain control 113 is to assure that the illustrative embodiment always radiates at substantially close to the same average RF power whether the embodiment is in transmit mode or idle mode.

Controller 119 receives a signal indicating whether the embodiment is in transmit mode or idle mode. When the embodiment is in transmit mode, controller 119 directs programmable synthesizer 115 to synthesize a carrier in the frequency channel assigned to the embodiment for normal transmission. When, however, the embodiment is in idle mode, controller 119 directs programmable synthesizer 115 to synthesize a carrier in a frequency channel set aside for spurious transmissions. Oscillator 117 provides a reference signal to programmable synthesizer 115. It will be clear to those skilled in the art how to make and use controller 119 and oscillator 117.

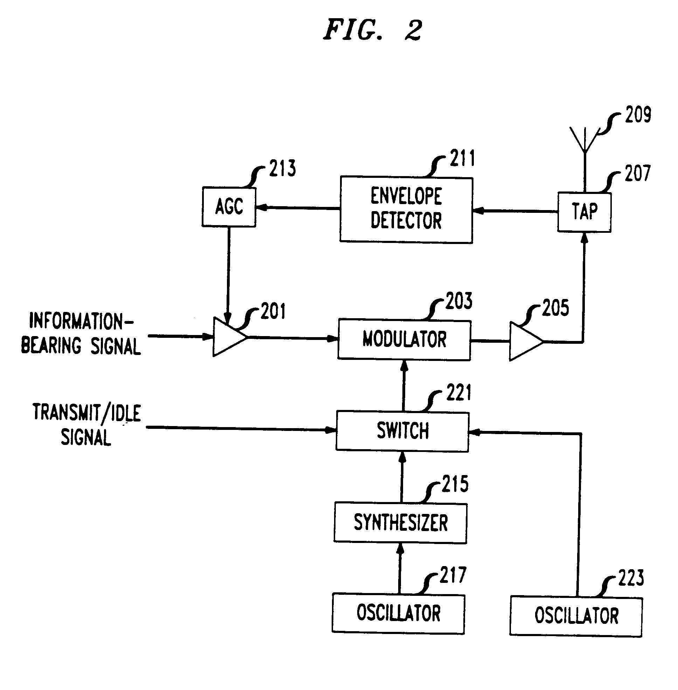

Referring to FIG. 2, an information-bearing signal (e.g., voice, data, etc.) is advantageously fed into amplifier 201. The gain of amplifier 201 is advantageously controlled by automatic gain control 213. From amplifier 201, the signal passes to modulator 203 where it is modulated onto a signal received from switch 221. It will be clear to those skilled in the art how to make and use amplifier 201, automatic gain control 213, modulator 203 and switch 221. The modulated signal is fed into amplifier 205, through tap 207 and to antenna 209. Tap 207 samples the signal fed to antenna 209 and feeds the samples to envelope detector 211. Envelope detector 211 feeds a signal to automatic gain control 213 representative of the average RF power of the radiated signal. It will be clear to those skilled in the art how to make and use tap 207 and envelope detector 211. It should be remembered that the purpose of amplifier 201, tap 207, envelope detector 211 and automatic gain control 213 is to assure that the illustrative embodiment always radiates at substantially close to the same average RF power whether the embodiment is in transmit mode or idle mode.

Switch 221 receives a signal indicating whether the embodiment is in transmit mode or idle mode, the synthesized carrier in the frequency channel assigned to the embodiment for normal transmission (from synthesizer 215), and a carrier in a frequency channel set aside for spurious transmissions. When the embodiment is in transmit mode, switch 221 directs the carrier from programmable synthesizer 215 to modulator 203, but when, however, the embodiment is in idle mode, switch 221 directs the carrier from oscillator 223 to modulator 203. The illustrative embodiment in FIG. 2 is advantageous in that synthesizer 215 need not be programmable and oscillator 223 can be relatively less precise than oscillator 217, which provides a reference signal to programmable synthesizer 215. It will be clear to those skilled in the art how to make and use this embodiment of the present invention.

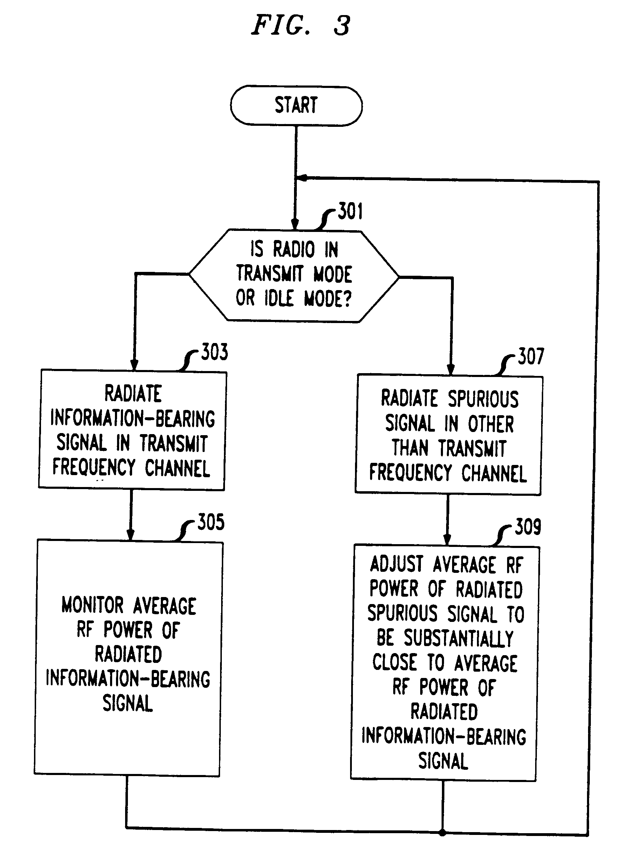

The operation of the illustrative embodiments in FIG. 1 and FIG. 2 can be depicted by the flowchart in FIG. 3.

## Claims

1. A method for operating a time division multiple access (TDMA) radio having a transmit mode and an idle mode, said method comprising the steps of:
in said transmit mode, radiating a first signal in a first frequency channel with a first average RF power;
AND CHARACTERIZED BY:
in said idle mode, radiating a second signal in a second frequency channel with a second average RF power.

2. The method of claim 1 wherein said first average power and said second average power are substantially the same.

3. The method of claim 1 further comprising the steps of:
creating a feedback signal by monitoring said first average RF power; and
adjusting said second average RF power based on said feedback signal.

4. A time division multiple access (TDMA) radio having a transmit mode and an idle mode, said radio comprising:
a first oscillator (217) for producing a first signal;
a second oscillator (223) for producing a second signal; and
a modulator (203) ;
CHARACTERIZED BY
switching means (221) for receiving said first signal and said second signal and for directing said first periodic signal to said modulator when said radio is in said transmit mode, and for directing said second signal to said modulator when said radio is in said idle mode.

5. The radio of claim 4 wherein said radio radiates at substantially a constant average RF power.

6. A time division multiple access (TDMA) radio having a transmit mode and an idle mode, said radio comprising:
a programmable synthesizer (115); and
a modulator (103) for receiving a signal from said programmable synthesizer;
CHARACTERIZED BY:
a controller (119) for directing said programmable synthesizer to produce a first signal when said radio is in said transmit mode, and for directing said programmable synthesizer to produce a second signal when said radio is in said idle mode.

7. The radio of claim 6 wherein said radio radiates at substantially a constant average RF power.
